# EUROPEAN PATENT APPLICATION

(11) **EP 1 041 743 A2**
(43) Date of publication of application: **04.10.2000**
(21) Application number: 00302499.9
(22) Date of filing: 27.03.2000
(51) Int. Cl.: H04B 7/26

(54) **TDMA/TDD data communication system with reduction of waiting time between a standby and an active state**

(30) Priority: 31.03.1999 JP 9307499
(71) Applicant: ALPS ELECTRIC CO., LTD., Ota-ku Tokyo 145 (JP)
(72) Inventor: Izumi, Hideo, Ota-ku, Tokyo (JP); Forde, Brian, Leopardstown, Dublin 18 (IE); Connolly, Bronagh, Leopardstown, Dublin 18 (IE); Cusack, Martin, Leopardstown, Dublin 18 (IE)
(74) Representative: Kensett, John Hinton

(57) **Abstract**

The present invention provides a TDMA/TDD data communication system that enables significant reduction of the communication waiting time in multiplex data communication between one master device and plural slave devices. The master device and the slave device each include a transmitting/receiving slot control unit (1) that sets time allocation of a transmitting/receiving slot, an encoding unit (2) that encodes slot-controlled transmission serial data and forms transmission coded data according to the TDMA/TDD system, a transmitting unit (3) that transmits the transmission coded data to partner equipment in the form of an RF signal, a receiving unit (4) that receives the RF signal transmitted by the partner equipment and converts it into a base band signal, a decoding unit (5) that decodes the base band signal into a reception coded data, and a control unit (6) that totally controls these units. The control unit (6) of the master device uses control data contained in the reception coded data of each of the slave devices having requested the communication, and sets each of the slave devices in the link setup state to put them into standby.

## Description

The present invention relates to a TDMA (Time Division Multiple Access)/TDD (Time Division Duplex) data communication system, particularly to a TDMA/TDD data communication system that, in data communication between one master device and a plural (N) pieces of slave devices, reduces the waiting time until a slave device in the standby state is started the communication with the master device.

As a multiplex communication system between multiple users, using the TDMA system, the PHS (personal Handyphone System) is generally used in Japan. As another system comparable to this PHS, the DECT (Digital Enhanced Cordless Telecommunication) system is widely used in Europe, Africa, the Middle and Near East, South America, Oceania, China, India, etc.

This DECT system is established by the ETSI (European Telecommunication Standard Institute) in Europe, being a standard Radio Communication System common to the European countries, which allows the transmission of data in addition to the voice signals. The frequency bands used are 1.88 to 1.90 GHz in Europe, 1.91 to 1.93 GHz in South America, and 1.90 to 1.92 GHz in China, in which 10 channels are allocated to each frequency band, and 12 slots each for the transmitting/receiving are allocated to one channel to perform the time division multiplex transmission.

The DECT system adopts the RS-232C/UART (Universal Asynchronous Receiver Transmitter) (IEEE conformable) serial interface as the interface for each of transmitting/receiving equipment (master device and slave device). And when executing the data communication (conversation), each unit of the transmitting/receiving equipment (master device and slave device) converts transmission serial data (speech information) into transmission coded data specified by the DECT system, transmits the coded data to partner transmitting/receiving equipment (master device and slave device) in the form of an RF (Radio Frequency) signal when a predetermined transmission slot arrives, and when receiving an RF signal from the partner transmitting/receiving equipment when a predetermined reception slot arrives, decodes the RF signal to attain a reception serial data (conversation information).

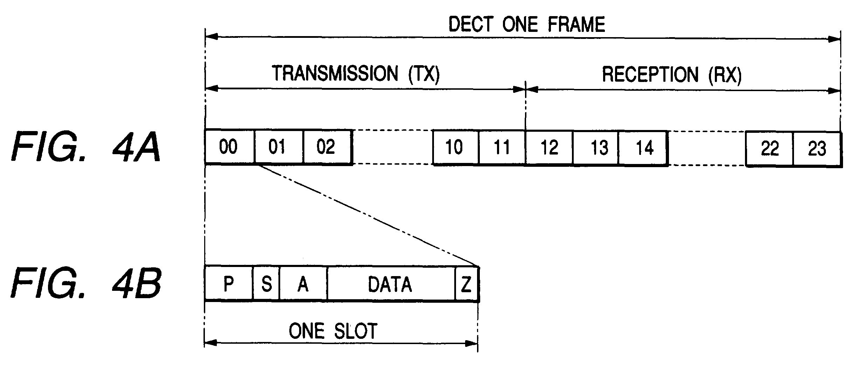

Fig. 4A and Fig. 4B are illustrations to explain the coded data format used in the DECT system, which shows the data format of one frame in one channel.

As shown in Fig. 4A, the one frame of the coded data according to the DECT system includes 12 slots from slot 00 through slot 11 assigned to the transmission (TX), and 12 slots from slot 12 through slot 23 assigned to the reception (RX). The time assigned to the transmission (TX) and the reception (RX) each is 5 ms.

As shown in Fig. 4B, the data configuration of each slot includes a synchronous preamble P to set an idle time for synchronization, a synchronous word S to indicate the DECT system coded data, an ID code A made up of an identification code for identifying a communication partner and the other control codes, DATA composed of communication data, and an error bit Z for the parity check.

In the DECT system, multiplex communication between one master device and plural slave devices having multiple link therewith executes the mutual transmission of a link setup (LINK SETUP, communication ready) signal directly before starting communication between the master device and any one of the slave devices at each time of the communication, enters the communication state directly after finishing the mutual transmission; and on the other hand, it executes the mutual transmission of a link release (LINK REL, communication terminating) signal directly after finishing the communication between the master device and any one of the slave devices to release the link. Also, communication in this system between the master device and another slave device selected executes the mutual transmission of the link setup signal and the link release signal directly before and after the communication. And, during the mutual transmission of the link setup signal and the link release signal, the communication between the master device and any one of the slave devices is disabled.

Thus, in the DECT system, when multiplex communication is made between one master device and plural slave devices in a multiple linked state, each time communication is made between the master device and any one of the slave devices, the link setup signal and the link release signal are mutually transmitted before and after the communication, so that the slave device is set in the link setup state or released from the link setup state. Accordingly, the communication cannot be made between the master device and any one of the slave devices during the transmission of the link setup signal and the link release signal, and to that extent, the communication waiting time for the slave device multiply linked with the master device is prolonged.

In this case, the mutual transmission of the link setup signal and the link release signal usually requires several seconds. The improvement in the configuration of the master device and/or the slave device, or the improvement in the software to operate them has shortened the time to some extent, however the best reduction showed about one to two seconds, and still more reduction was impossible achieve.

The time for the mutual transmission of the link setup signal and the link release signal does not cause a big problem specially in the applications having a comparably low frequency at which the master device of the DECT system is accessed by the slave device. However, in the applications to the office appliances such as the POS (Point of Sales) system or the card readers, though the communication data quantity transmitted at one time is limited, the communication waiting time on the slave device side becomes prolonged, because there is a high rate of occurrence of simultaneous accesses from many slave devices.

The present invention has been made in view of such technical circumstances, and it is an object of the present invention to provide a TDMA/TDD data communication system that significantly reduces, in a multiplex communication between one master device and plural slave devices, the communication waiting time on the slave device side.

In order to accomplish the object, in the TDMA/TDD data communication system according to the present invention, a master device and a slave device each contain a transmitting/receiving slot control unit, an encoding unit, a transmitting unit, a receiving unit, a decoding unit, and a control unit, in which the control unit of the master device includes means that uses control data contained in the reception coded data of each of the slave devices having requested the communication, and sets each of the slave devices in the link setup state to put them into standby.

According to the foregoing means, in the multiplex communication between the one master device and the plural slave devices having requested the communication, the master device uses the control data contained in the coded data transmitted from the plural slave device having requested the communication, and thereby puts these slave devices in the link setup state to let them wait for the communication. When the communication with one slave device is finished, the master device only confirms the path of the communication with another slave device in the communication standby to start the communication with the slave device; and when the communication with the slave device is finished, in the same manner as the above, by only the confirmation of the path of the communication with further another slave device, the master device is made to start the communication with the next slave device. Thereby, after the waiting time of about 200 to 300 milliseconds from the end of the communication with one slave device, the next slave device is able to start the communication with the master device. Thus, in comparison to the communication waiting time by the well-known system of this type, this system remarkably reduces the communication waiting time imposed on the slave device.

In accordance with one aspect of the present invention, the TDMA/TDD data communication system executes data communication between a master device and a slave device, and the master device and the slave device each include a transmitting/receiving slot control unit that sets time allocation of a transmitting/receiving slot, an encoding unit that encodes slot-controlled transmission serial data and forms transmission coded data according to the TDMA/TDD system, a transmitting unit that transmits the transmission coded data to partner equipment in the form of an RF signal, a receiving unit that receives the RF signal transmitted by the partner equipment and converts it into a base band signal, a decoding unit that decodes the base band signal into a reception coded data, and a control unit that totally controls the units, in which the control unit of the master device uses control data contained in the reception coded data of each of the slave devices having requested the communication, and sets each of the slave devices in the link setup state to put them into standby.

Preferably the, TDMA/TDD data communication system utilizes control data contained in ID data of the A field of the slot 1 reception coded data.

Preferably the, TDMA/TDD data communication system utilizes the hand-over function of the A field of the slot 1 data in the DECT system to implement the link setup state.

According to these embodiments of the present invention, when multiplex communication is made between one master device and plural slave device in a multiple linked state, the master device uses the control data contained in the A field of the coded data transmitted from the plural slave devices having requested the communication, thereby puts these slave devices each in the link setup state, and then puts them in the communication standby state. When the communication between the master device and one slave device put in the link setup state is finished, the master device only confirms the path of the communication with another slave device waiting for the communication in the link setup state so as to start the communication with the slave device; and when the communication with the slave device is finished, in the same manner as the above, by only the confirmation of the path of the communication with further another slave device waiting for the communication in the link setup state, the master device is designed to start the communication with the slave device. Therefore, after the waiting time of about 200 to 300 milliseconds necessary for the confirmation of the communication path from the end of the communication with one slave device, the next slave device is able to start the communication with the master device. Thus, in comparison to the communication waiting time by the well-known system of this type that mutually transmits the link setup signal and the link release signal, this system remarkably reduces the time for which the slave device has to wait for the communication.

Embodiments of the present invention will now be described, by way of example only, with reference to the accompanying drawings, in which:
Fig. 1 is a block diagram illustrating one embodiment of a data transmitting/receiving equipment used in the TDMA/TDD data communication system related to the present invention;
Fig. 2 is a chart explaining the operation process when the communication between the master device and the slave device 1 is put in a hold state, and the communication between the master device and the slave device 2 is started, in the embodiment shown in Fig. 1;
Fig. 3 is a chart explaining the operation process when the communication between the master device and the slave device 1 is finished, and the communication between the master device and the slave device 2 is started, in the embodiment shown in Fig. 1; and
Fig. 4 is an illustration of a coded data format used in the DECT system.

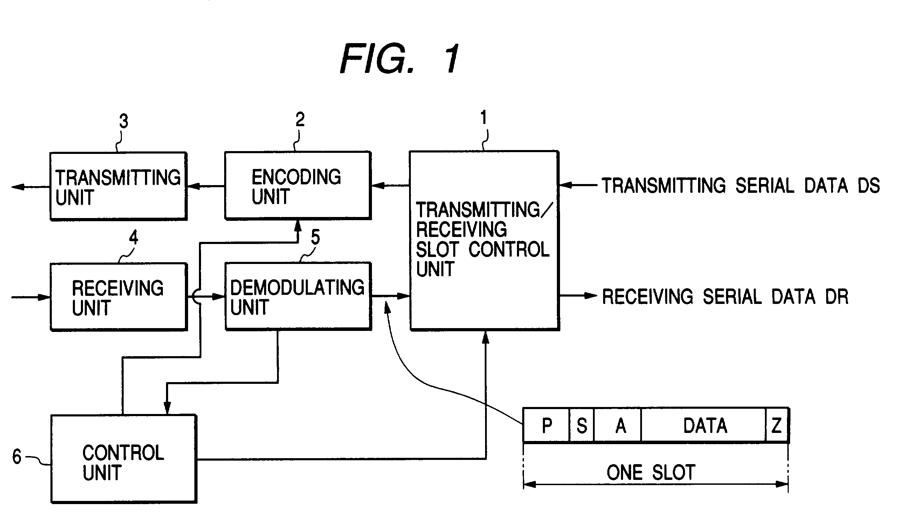

As shown in Fig. 1, the transmitting/receiving equipment of this embodiment includes a transmitting/receiving slot control unit 1 that executes a time allocation of a transmission slot for transmitting an inputted transmission serial data DS and time allocation of a reception slot for receiving outputted reception serial data DR, an encoding unit 2 that encodes the transmission serial data DS and forms transmission coded data according to the TDMA/TDD system, a transmitting unit 3 that transmits the transmission coded data to partner equipment in the form of an RF transmission signal, a receiving unit 4 that receives the RF signal transmitted by the partner equipment and converts it into a base band signal, a decoding unit 5 that decodes the base band signal into reception coded data, and a control unit 6 that totally controls mainly the transmitting/receiving slot control unit 1, the encoding unit 2, and the decoding unit 5.

And, the transmission serial data output terminal of the transmitting/receiving slot control unit 1 is connected to the transmission serial data input terminal of the encoding unit 2, and the reception serial data input terminal thereof is connected to the reception serial data output terminal of the decoding unit 5. And, the transmitting/receiving slot control unit 1 with the transmission serial data input terminal and the reception serial data output terminal is connected to a signal processing unit not illustrated that outputs the transmission serial data DS and receives the reception serial data DR. The transmission coded data input terminal of the transmitting unit 3 is connected to the transmission coded data output terminal of the encoding unit 2, and the RF signal output terminal is connected to a transmitting/receiving antenna not illustrated. The RF signal input terminal of the receiving unit 4 is connected to the transmitting/receiving antenna, and the base band signal output terminal thereof is connected to the base band signal input terminal of the decoding unit 5. The control unit 6 is connected to the control terminal of the transmitting/receiving slot control unit 1, the control terminal of the encoding unit 2, and the control terminal of the decoding unit 5.

The operation of the transmitting/receiving equipment of this embodiment with the above configuration will be described.

When the signal processing unit not illustrated outputs the transmission serial data DS, the transmitting/receiving slot control unit 1 assigns the transmission serial data DS to one of the 12 slots from slot 00 through slot 11 for the transmission (TX) slot, for example, slot 00, as shown in Fig. 4A. And, the transmitting/receiving slot control unit 1 supplies the transmission serial data DS to the encoding unit 2 so that the data DS can be transmitted within a time assigned to slot 00. The encoding unit 2 encodes the supplied transmission serial data DS to form transmission coded data specified by the TDMA/TDD system, and supplies the transmitting unit 3 with the transmission coded data thus formed. The transmitting unit 3 converts this transmission coded data into an RF signal, applies the frequency conversion to the RF signal to form a transmission RF signal, amplifies the transmission RF signal to a specific level, and supplies the result to the transmitting/receiving antenna not illustrated, thus transmitting it toward the partner equipment.

when the transmitting/receiving antenna receives an RF signal transmitted from the partner transmitting/receiving equipment during a time assigned to one of the 12 slots from slot 12 through slot 23 for the reception (RX) slot, for example, slot 12, as shown in Fig. 4A, the receiving unit 4 applies the frequency conversion to the RF signal received by the transmitting/receiving antenna, converts the frequency-converted RF signal into a base band signal, and supplies the base band signal thus attained to the decoding unit 5. The decoding unit 5 decodes this base band signal into reception coded data, and supplies the decoded result to the transmitting/receiving slot control unit 1 as the reception coded data of the slot 1 data. Then, the transmitting/receiving slot control unit 1 converts the supplied reception coded data into the reception serial data DR, which is supplied to the signal processing unit not illustrated. The signal processing unit applies the specific processing to the supplied reception serial data DR.

Next, the operation under such a circumstance that one master device receives multiple communication requests (data communication requests) from plural slave devices will be discussed.

When receiving a communication request from any one of the slave devices, for example, slave device 1, the master device extracts the ID code and the control data contained in the A field of the communication request signal, and forms a link setup signal destined for the slave device 1 by using the control data. The master device transmits the link setup signal toward the slave device 1, and the slave device 1, upon receiving it, transmits the link setup signal to the master device, thus setting up the link setup state between the master device and the slave device 1.

At this moment, if the master device is in the midst of communication with another slave device, the slave device 1 is brought into the communication standby in the link setup state; and when the communication between the master device and the slave device is finished, or suspended, after the verification signal for the line of contact is exchanged between the master device and the slave device 1, the master device and the slave device 1 enter the communication.

Every time when the master device receives the communication requests from the other slave device (slave device 2 through slave device N), in the same manner as the communication between the master device and the slave device 1, the link setup signal is exchanged between the master device and each of the slave device 2 through slave device N having requested the communication, and the slave device 2 through slave device N are each set in the link setup state; and when the master device is in the midst of communication, these slave device 2 to N are each brought into the communication standby.

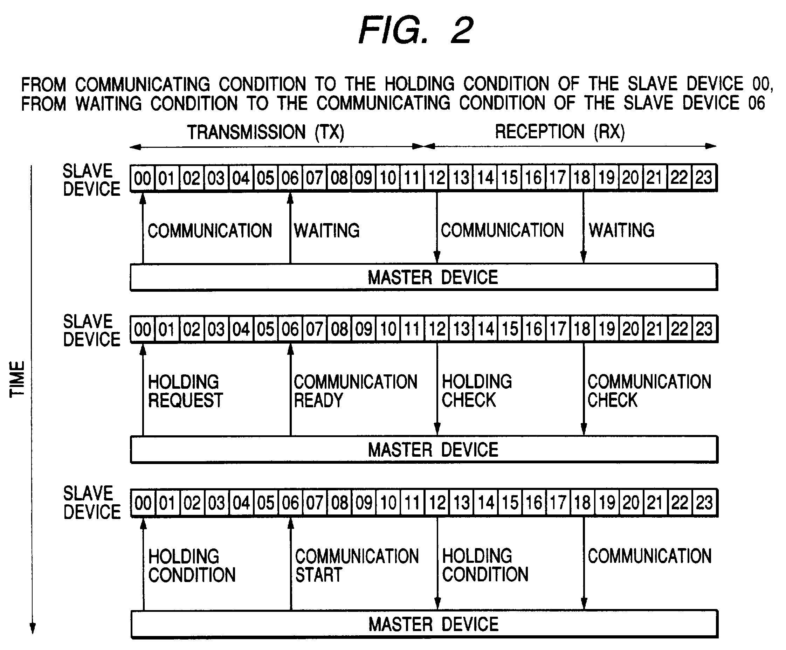

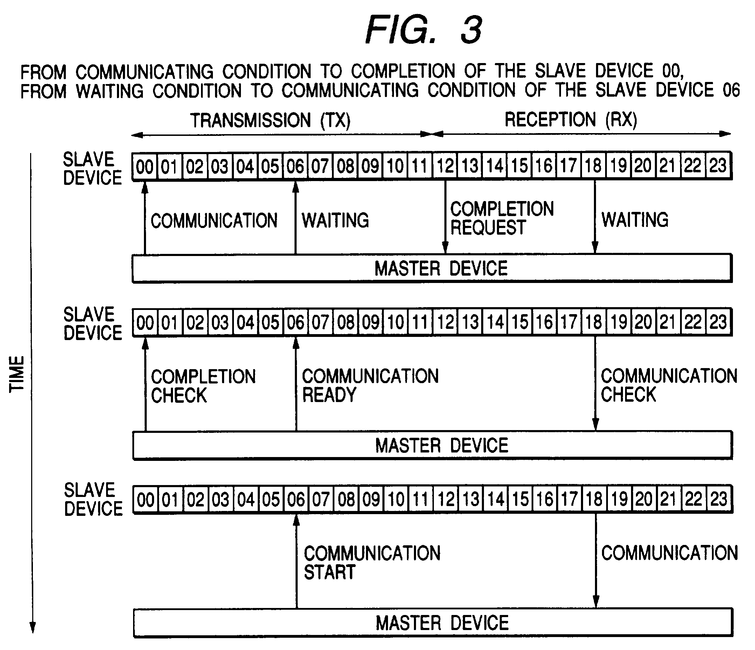

Next, Fig. 2 and Fig. 3 are illustrations explaining the operation process when the slave device 2 waiting for the communication in the link setup state starts the communication with the master device, in which Fig. 2 shows a case where the communication between the master device and the slave device 1 is put in a hold state, and the communication between the master device and the slave device 2 is started, and Fig. 3 shows a case where the communication between the master device and the slave device 1 is finished, and the communication between the master device and the slave device 2 is started.

First, referring to Fig. 2, the operation process will be described, in which the communication between the master device and the slave device 1 is put in a hold state and the communication between the master device and the slave device 2 is started.

As shown in the upper part in Fig. 2, the slave device 1 is set to communicate with the master device by using slot 00 for the transmission (TX) and slot 12 for the reception (RX), and the slave device 2 is set to communicate with the master device by using slot 06 for the transmission (TX) and slot 18 for the reception (RX). When the master device and the slave device 1 are already in the communication and the slave device 2 is in the communication standby, the communication from the master device to the slave device 1 is executed during the period of slot 00 for the transmission (TX), and the communication from the slave device 1 to the master device is executed during the period of slot 12 for the reception (RX).

Next, when the communication with the slave device 1 reaches a predetermined communication time, as shown in the middle part in Fig. 2, the master device transmits a communication hold request signal to the slave device 1 during the period of slot 00 for the transmission (TX), and simultaneously transmits a communication ready signal to the slave device 2 during the period of slot 06 for the transmission (TX). And, the slave device 1 transmits a communication hold confirmation signal to the master device during the period of slot 12 for the reception (RX) in response to the transmission of the communication hold request signal, and the slave device 2 transmits a communication confirmation signal to the master device during the period of slot 18 for the reception (RX) in response to the transmission of the communication ready signal.

Next, as shown in the lower part in Fig. 2, the master device transmits a communication hold setting signal to the slave device 1 during the period of slot 00 for the transmission (TX) in response to the reception of the communication hold confirmation signal from the slave device 1, and simultaneously transmits a communication start confirmation signal to the slave device 2 during the period of slot 06 for the transmission (TX) in response to the reception of the communication confirmation signal from the slave device 2. At this moment, the slave device 1 transmits the same communication hold setting signal to the master device during the period of slot 12 for the reception (RX) in response to the transmission of the communication hold setting signal, and the slave device 2 starts the communication to the master device during the period of slot 18 for the reception (RX) in response to the transmission of the communication start confirmation signal.

And, when the communication with the slave device 2 reaches the predetermined communication time, in the same manner as the foregoing case, the master device holds the communication with the slave device 2, and restarts the communication with the slave device 1.

Next, referring to Fig. 3, the operation process will be described, in which the communication between the master device and the slave device 1 is finished and the communication between the master device and the slave device 2 is started.

As shown in the upper part in Fig. 3, the slave device 1 is set to communicate with the master device by using slot 00 for the transmission (TX) and slot 12 for the reception (RX), and the slave device 2 is set to communicate with the master device by using slot 06 for the transmission (TX) and slot 18 for the reception (RX). While the master device and the slave device 1 are already in the communication and the slave device 2 is in the communication standby, when the slave device 1 finishes the communication with the master device, the slave device 1 transmits a communication termination request signal to the master device during the period of slot 12 for the reception (RX).

Next, as shown in the middle part in Fig. 3, receiving the termination request signal from the slave device 1, the master device transmits a communication termination confirmation signal to the slave device 1 during the period of slot 00 for the transmission (TX) to finish the communication with the slave device 1, and simultaneously transmits the communication ready signal to the slave device 2 during the period of slot 06 for the transmission (TX). The slave device 2 transmits the communication confirmation signal to the master device during the period of slot 18 for the reception (RX) in response to the transmission of the communication ready signal.

And, as shown in the lower part in Fig. 3, receiving the communication confirmation signal from the slave device 2, the master device transmits the communication start signal to the slave device 2 during the period of slot 06 for the transmission (TX). The slave device 2 starts the communication to the master device during the period of slot 18 for the reception (RX) in response to the transmission of the communication start confirmation signal.

And, when the communication with the slave device 2 is finished, in the same manner as the foregoing case, the master device may be set to communicate with another slave device selected in the communication standby, namely, one of the slave device 3 through slave device N, by using another transmission slot, for example, slot 02, and another reception slot, for example, slot 14; and it may be set to communicate with the slave device 1 again, by using the transmission (TX) slot 00 and the reception slot (RX) slot 12.

In this case, the function to put the slave device having requested the communications into the link setup state to the master device is fulfilled by utilizing the hand-over function of the A field of the slot 1 data in the DECT system. The hand-over function here is achieved by releasing the hold function that does not actually exchange data while maintaining the communication state.

Thus, according to this embodiment, each of the slave devices having requested the communication to the master device is set in the link setup state at the moment of each communication request being issued, and each slave device is put in the communication standby. When the communication between the parent and the slave device 1 is held, or finished, the communication path between the master device and the slave device 1 is set in the hold or termination state without the mutual transmission of the link release signal. Also, when the communication between the parent and the slave device 2 in the communication standby is started, the communication path between the master device and the slave device 2 is only verified and the mutual transmission of the link setup signal is not executed. Therefore, this embodiment will remarkably reduces the time for switching the slave device 1 in the communication into the slave device 2 in comparison to the switching time by the conventional system; specifically, it will reduce the switching time from several seconds to about 200 to 300 milliseconds. And to that difference, this embodiment enables significant reduction of the communication waiting time for the slave device, when one master device has a comparably large number of slave devices linked.

According to the embodiment thus described, in a multiplex communication between one master device and plural slave devices in a multiple linked state, the link setup signal is exchanged between the master device and each of the slave device having requested the communication, and the slave devices are each set in the link setup state to put each in the communication standby. When the communication between the master device and one slave device is held or finished, after the waiting time of about 200 to 300 milliseconds necessary for the confirmation of the path of the communication executed between the master device and another slave device selected in the communication standby, the communication between the master device and the slave device selected is started; and when the communication between them is held or finished, the communication between the master device and further another slave device selected in the communication standby is started simply by the confirmation of the communication path, in the same manner as the above case. Therefore, the communication system of the present invention remarkably reduces the communication waiting time from the moment that communication with one slave device is held or finished until the moment that communication with another slave device is started, in comparison to the conventional system that mutually transmits the link setup signal and the link release signal.

## Claims

1. A TDMA/TDD data communication system executing data communication between a master device and a slave device, wherein the master device and the slave device each include a transmitting/receiving slot control unit that sets time allocation of a transmitting/receiving slot, an encoding unit that encodes transmission serial data with the slot under control and forms transmission coded data according to the TDMA/TDD system, a transmitting unit that transmits the transmission coded data to partner equipment in the form of an RF signal, a receiving unit that receives the RF signal transmitted by the partner equipment and converts it into a base band signal, a decoding unit that decodes the base band signal into a reception coded data, and a control unit that totally controls the units, in which the control unit of the master device uses control data contained in the reception coded data of each of the slave devices having requested the communication, and sets each of the slave devices in the link setup state to put them into standby.

2. A TDMA/TDD data communication system according to Claim 1, wherein the control data is contained in ID data of the A field of the slot 1 reception coded data.

3. A TDMA/TDD data communication system according to Claim 1 or 2wherein the link setup state is executed by the hand-over function of the A field of the slot 1 data in the DECT system.
